# EUROPEAN PATENT SPECIFICATION

(11) **EP 1 564 654 B1**
(45) Date of publication and mention of the grant of the patent: **26.09.2007**
(21) Application number: 04250705.3
(22) Date of filing: 10.02.2004
(51) Int. Cl.: G06F 17/30

(54) **Apparatus and method for determining synchronization status of database copies connected by a radio air interface of a radio communication system**
Vorrichtung and Verfahren zur Bestimmung des Synchronisationszustandes von Datenbankkopien, die über eine Funkschnittstelle eines Funkkommunikationssystems verbunden werden
Dispositif et méthode pour déterminer l'état de synchronisation de copies de bases de données connectées par une interface radio d'un système de radiocommunication

(43) Date of publication of application: 17.08.2005
(73) Proprietor: Research In Motion Limited, Waterloo, Ontario N2L 3W8 (CA)
(72) Inventor: Yach, David Paul, Waterloo, Ontario N2K 2N1 (CA); Linkert, Barry Warren, RR2 Petersburg, Ontario,N0B 2H0 (CA); Zhu,Jie, Kitchener, Ontario,N2G 4Z7 (CA); Omar, Salim Hayder, waterloo,Ontario, N2T 1z1 (CA); Tysowski,Piotr K., Waterloo, Ontario,N2K 2r2 (CA); Hecht-Enns,, Waterloo, Ontario N2V 2S6 (CA); Phillips, Catherine, Waterloo, Ontario, N2T 2S5 (CA); Pereira, Kathy Ann, waterloo, Ontario, N2V 2R7 (CA)
(74) Representative: Hibbert, Juliet Jane Grace

(56) References cited:
- US-A1- 2002 029 214
- US-A1- 2002 059 299
- US-A1- 2004 025 072
- US-B1- 6 286 032

## Description

The present invention relates generally to a manner by which to synchronize asynchronously updateable database copies maintained at a network part and at a mobile node of a radio communication system. More particularly, the present invention relates to apparatus, and an associated method, by which to compare the database copies to determine whether the database copies are in match with one another.

Signaling is exchanged between the mobile node and the network part to permit the determination to be made. A group hash, representative of values of a group of data records is first formed and used to determine whether the database copies are in match with one another. If a determination can be made that that the database copies are in match with one another, based upon analysis of the group hash value, no additional information is communicated over the radio air interface for synchronization analysis. The bandwidth required to communicate the group hash value over the radio air interface is small, necessitating only a corresponding small amount of radio resources to be allocated for synchronization operations.

### BACKGROUND OF THE INVENTION

The effectuation of communication services by way of communication of data is a necessary aspect of modern society. Communication systems of many varied types and constructions have been developed and deployed. And, data is communicated to effectuate the communication services by way of such communication systems.

As technological advancements permit, improvements to existing communication systems are made, and new types of communication systems are developed and deployed. Generally, improvements to existing communication systems and new types of communication systems permit increased amounts of data to be communicated in lessened amounts of time, sometimes in manners and between positions that were previously unavailable.

Advancements in technologies that have been implemented in communication systems include digital communication techniques. The use of digital communication techniques in a communication system provide various advantages including the ability to provide improved communication efficiencies in the communication system in which the communication techniques are utilized. Data that is to be communicated during operation of the communication system, once digitized, can communicated during discrete intervals. Dedicated channels, such as circuit-switched channels, need not be allocated to effectuate a communication service; rather, only shared channels, such as packet-switched channels, are needed to permit the communication of data and corresponding effectuation of the communication service.

A radio communication system is an exemplary type of communication system. Data is communicated between communication stations of a radio communication system upon radio communication channels. The radio communication channels are formed of portions of the electromagnetic spectrum that are allocated to, or otherwise used by, the radio communication system. Radio communication systems also are constructed to utilize digital communication techniques. Due to the bandwidth limitations regularly associated with radio communication systems, the improved communication efficiencies permitted through the use of digital communication techniques are particularly advantageous when used in a radio communication system.

Concomitant with the advancements in digital communication techniques are also advancements in data processing techniques. Data processing is also an endemic part of modern society. Data processing is performed upon data communicated during operation of a communication system. Advancements in data processing techniques have also been implemented in communication systems.

For instance, communication systems are regularly used by which to transport data that is to be stored or processed.

Portable data storage and processing devices are exemplary data processing devices that are regularly utilized. Some of such portable data storage and processing devices are referred to as personal digital assistants (PDAs). A personal digital assistant includes storage elements at which databases are created and maintained. Data stored at a database is selectably retrievable by a user of the personal digital assistant. The data is typically formatted as a series of data records in which each data record contains one or more fields. Upon selection of the user, data is retrieved from a database and displayed at a user interface of the personal digital assistant. Sorting, as well as other, processing operations are selectably also performed upon the data stored at the databases. And, the data stored at the databases are changeable, i.e., updateable, to alter, add to, or delete, the data stored at the databases.

Creation of back up copies of the databases maintained at the PDA provides a manner by which to recover the stored data in the event that the database contents are disrupted or lost. Some constructions of personal digital assistants provide for the back up of the data stored at the data bases at personal computers or other computing stations. To effectuate the back up of the data, a fixed connection is formed between the personal digital assistant and the back up location, e.g., a personal computer.

Patent publications of United States Patent applications of document numbers US2004/025072 A1 and US2002/029214 A1, for instance disclose database copying and synchronization schemes.

When the data is backed up, thereby to be stored at both the personal digital assistant and at the back up location, the data base copies are true copies of one another, i.e., are in complete correspondence with one another. However, if either of the databases is asynchronously updateable, upon subsequent update of one, but not another, of the database pairs, the respective databases are no longer in complete correspondence with one another.

To place the databases back in complete correspondence with one another, subsequent synchronization of the respective database pairs is required. Synchronization operations are performed, for instance, during subsequent back up operations in which the contents of the respective databases of the database pairs are compared to one another.

Some portable devices provide for back up of the stored data to a computing station that obviates the need for use of a fixed wireline connection. Instead, back up operations are performed by way of a radio air interface extending between the portable device and the back up device. Back up and synchronization operations that are performed by way of a radio air interface are, however, more problematical due to bandwidth limitations that are generally associated with radio communication systems. Manners conventionally utilized by which to back up and synchronize data at the respective databases of the database pairs are, generally, prohibitively, bandwidth consumptive, limiting their usefulness in radio communication systems.

A manner by which better to maintain the databases of the database pairs in complete correspondence with one another by way of a radio air interface is required. Minimal radio resources are available, and any such manner must be implementable through the use of only minimal radio resources

It is in light of this background information related to the synchronization of databases by way of a radio air interface that the significant improvements of the present invention have evolved.

### SUMMARY OF THE INVENTION

The present invention, accordingly, advantageously provides apparatus, and an associated method, by which to synchronize asynchronously updateable database copies maintained at a network part and at a mobile node of a radio communication system.

The present invention is set out in the independent claims. Some optional features are set out in the claims dependent thereto.

Through operation of an embodiment of the present invention, a manner is provided by which to compare the database copies to determine whether the database copies are in match with one another.

Determination of whether the database copies are in match with one another is made through the generation of signalling between the mobile node and the network part. A group hash is formed at the mobile node. The group hash is representative of values of a group of data records of the database maintained at the mobile node. The group hash is formed at the mobile node and communicated to the network part of the radio communication system by way of the radio air interface. A corresponding group hash value is also formed at the database copy maintained at the network part of the radio communication system. Comparisons are made to determine whether the group hash values, separately calculated at the mobile node and at the network part upon the respective database copies of the database pairs are in match with one another. If the group hashes are of identical values, the groups of data records are determined to be in match with one another, viz., the data records of the group are in complete correspondence with one another and the data records of the group are identical copies of one another. As only a single hash, representative of an entire group of data records is used to determine that the data records of the entire group are in match with a corresponding network copy of the same group of data records, the amount of radio resources required to communicate the hash between the mobile node and the network part is minimal.

In the event that a determination is made that the group hashes are not identical values, individual record hashes associated with individual data records of the group of data records are communicated by the mobile node to the network part. Corresponding individual record hash values formed at the network part representative of the corresponding individual data records of the group at the network part are compared there together. Determinations are made, on an individual data record basis, whether the pairs of individual data records are in match with one another. A determination is made that a pair of individual data record copies are in match with one another when the values of the respective individual record hashes are of equal values. When determinations are made that a pair of individual data records are in match with one another based upon correspondence of the individual hashes associated with the respective data records of the data record pairs, only individual record hashes are communicated upon the radio air interface to make such determinations. Again, as the hashes require only limited allocations of bandwidth for their communication upon the radio air interface, the limited resources available upon the radio air interface are efficiently utilized to confirm synchronization of the individual data records.

If a comparison of the individual record hashes of a pair of individual data records of the group indicates the values not to be the same, additional synchronization operations are performed to determine the reasons for the mismatch and to place the data records of the data record pair back in match with one another.

In another aspect of the present invention, an identifier is associated with the group hash that is communicated between the mobile node and the network part of the communication system. The identifier forms, for instance, a number of a data record of the group of data records with which the group hash is associated. Analogously, also, when individual record hashes are communicated by the mobile node to the network part, identifiers are also communicated therewith. The identifiers again, for instance, form record number identifiers of the individual data records. Thereby, the hashes are easily identified at the network part, thereafter to be compared against corresponding values of the hashes formed of the data records of the database copy maintained at the network part.

Synchronization operations in which the database contents are compared to determine whether the databases are in match with one another are initiated either at the mobile node or at the network part. The synchronization is triggered, for instance, by a synchronization initiation message generated at the network part and communicated to the mobile node by way of the radio air interface. Or, the synchronization procedure is initiated at the mobile node, triggered, for instance, when a change is made to a change listing that lists changes to any data record of a database at the mobile node. Upon triggering of the synchronization process, the groups of the data records of the database are defined, and hashes for each of the data records are formed. Hashes of the individual data records that form a group of data records are aggregated together to form a group hash. And, the group hash is communicated upon the radio air interface to the network part. Analogous operations are performed at the network part, and the determination is made whether the data records of the group are in match with one another.

Thereby, a manner is provided by which to synchronize database pairs embodied at a mobile node and at a network part of a radio communication system. Because hashes are communicated between the mobile node and the network part, radio resources required to be allocated for the synchronization process are minimal. Further minimization is provided by the use of group hashes that permit data record correspondence determinations to be on a group basis, obviating, at times, even the communication of hashes for each data record.

In these and other aspects, therefore, apparatus, and an associated method, is provided for a radio communication system. The radio communication system includes a network part having at least a first network copy database maintained thereat and a mobile node having a corresponding at least a first mobile copy database maintained thereat. Data of the first network copy database and the first mobile copy database are in match with one another when data of each data record of the first network copy database is in complete correspondence with corresponding data of each data record of the first mobile copy database. Apparatus facilitates determination of whether the first network copy database is in match with the first mobile copy database. A group hash generator is embodied at the mobile node and is adapted to receive indications of at least selected portions of at least selected data records of the at least the first mobile copy. The group hash generator selectably forms a group hash values formed of aggregated hash values. The aggregated hash values are aggregated from individual record hashes, and the aggregated hash values are representative of at least a first selected group of the selected data records. The group hash values are for communication to the network part to determine whether the first network copy database and the first mobile copy database are in match with one another.

A more complete appreciation of the present invention and the scope thereof can be obtained from the accompanying drawings that are briefly summarized below, the following detailed description of the presently-preferred embodiments of the invention, and the appended claims.

### BRIEF DESCRIPTION OF THE DRAWINGS

Figure 1 illustrates a functional block diagram of a radio communication system in which an embodiment of the present invention is operable.
Figure 2 illustrates a functional block diagram of portions of the radio communication system shown in Figure 1.
Figure 3 illustrates a message sequence diagram showing signaling generated during operation of the radio communication system shown in Figures 1-2 pursuant to an embodiment of the present invention.
Figure 4 illustrates a method flow diagram listing the method steps of the method of operation of an embodiment of the present invention.

### DETAILED DESCRIPTION

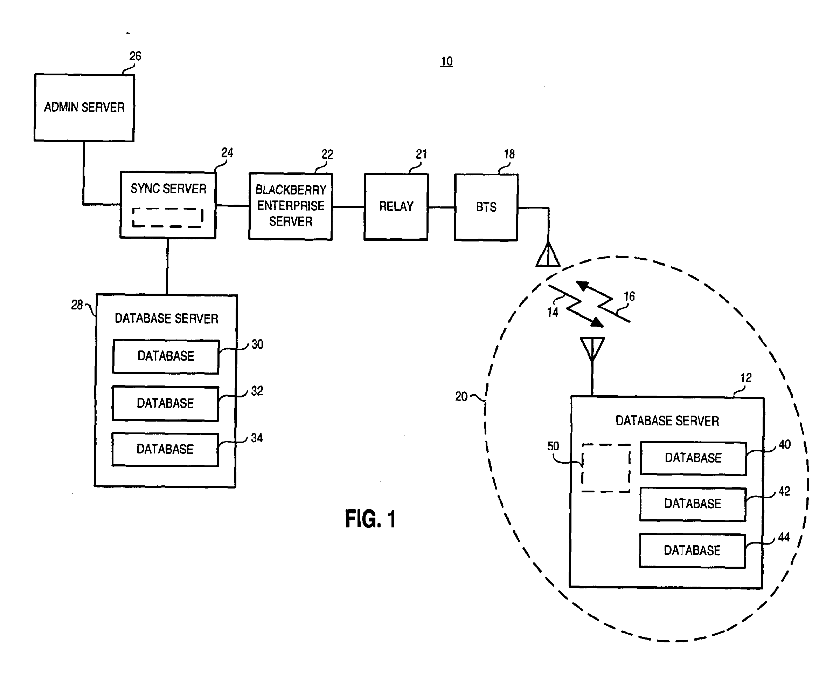

Referring first to Figure 1, a radio communication system, shown generally at 10, provides for radio communications between a network part of the communication system and a mobile node, represented by the mobile node 12. During operation of the communication system, communications are effectuated by way of the radio air interface between the mobile node and the network part of the communication system.

For instance, data that is originated at the mobile node is communicated upon radio uplink channels defined upon the radio air interface to the network part of the communication system. And, data originated at the network part of the communication system is selectably communicated upon radio downlink channels defined upon the radio air interface to the mobile node. The arrow 14 is representative of a radio downlink upon which downlink channels are defined, and the arrow 16 is representative of a radio uplink upon which uplink channels are defined.

Various elements of the network part of the communication system are functionally represented in the Figure. A single base transceiver station 18 that forms a radio communication station capable of transceiving data with the mobile node. The base station 18 defines a coverage area, or cell, 20. When a mobile node, such as the mobile node 12, is positioned within the coverage area defined by the cell, communications between the mobile node and the base station are generally effectuable.

A mobile node, as its name indicates, is permitted mobility, permitting the mobile node successively to be positioned in successive cells, associated with successive base stations of the communication system. For purposes of simplicity, only a single base station and its associated cell is shown in the Figure.

The network part of the communication system is shown also to include a relay device 22, here forming a BlackBerry^{™} Enterprise Server relay, and a synchronization (sync) server 24. While shown to be separate functional elements, the relay and server, in the exemplary implementation are embodied upon the same device, or platform.

The network part of the communication system also includes an administration (admin) server 26 that is coupled to the sync server 24. The administration server provides administrative functions and services to the communication system. Administrative control, for instance, is provided by the admin server over the sync server.

The sync server 24 is coupled to a database server 28 at which databases are created and maintained. Here, three exemplary databases, databases 30, 32, and 34 are embodied at the database server. In the exemplary implementation, the databases are of a text format, here an extensible mark-up language (XML) format. Each of the databases 30, 32, and 34 is formed of a series of data records, each formed into one or more data fields. In the exemplary implementation, the data fields are referred to as being record fields in which some of the record fields define key fields.

The databases 30, 32, and 34 are copies of corresponding databases 40, 42, and 44 embodied at the mobile node 12. Other databases, and copies thereof, are analogously also created and maintained at both the mobile node 12 and the data server, or elsewhere at the network part of the communication system. And, analogously, databases maintained at other mobile nodes have copies thereof also embodied at the database server, or other network part of the communication system. While the respective database copies forming database pairs at the mobile node and at the network part are copies of one another, the contents of the data records are asynchronously, i.e., asymmetrically, updateable. When a change is made to one of the databases of a pair of database copies, the respective databases are no longer in complete conformity with one another.

That is to say, a database copy is formed pursuant, e.g., a back-up procedure, in which the data contents of the database are copied to form the pair of database copies. The data fields of each data record of the respective databases are copies of one another such that the databases are in-match, i.e., duplicate copies of, one another. However, if an asynchronous change is made to one, but not another, of the databases of the database copy pairs, the databases are no longer in-match with one another. That is to say, the database copies are no longer duplicates of one another due to the asynchronous changes made to one of the databases of the pair. The databases of the database pair remain out of match with one another until synchronization operations are performed, or the database copies are otherwise caused to be placed back in match with one another.

Synchronization of the database copies requires, however, signaling to be performed upon the radio air interface to determine whether the database copies are in match with one another. To facilitate minimization of the radio resources that are required to carry out the determination of whether the databases are in match with one another, the mobile node includes apparatus 50 of an embodiment of the present invention. The network part also includes additional apparatus 50 of an embodiment of the present invention. In the exemplary implementation, the network part of the apparatus is embodied at the synchronization server. In other implementations, the network part of the apparatus is embodied elsewhere, or distributed throughout more than one entity of the network part. The apparatus 50 operates in a manner that facilitates determination of whether the database copies of a database pair are in complete correspondence with one another that requires lessened amounts of radio bandwidth allocations than conventional manners that are utilized to make such determinations.

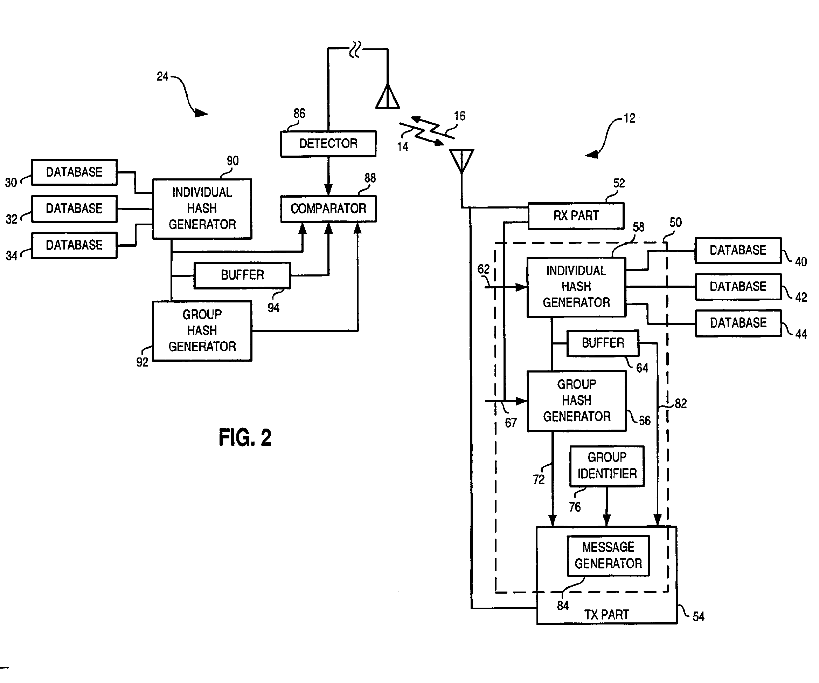

Figure 2 illustrates portions of the radio communication system 10, including elements of the apparatus 50 of an embodiment of the present invention. The elements of the apparatus are functionally represented and are implemented in any desired manner, such as by algorithms executable by processing circuitry.

The illustrated portions of the communication system again show the sync server 24 and the mobile node 12. The arrows 14 and 16, representative of the downlinks and uplinks upon which downlink and uplink channels are defined are again shown and form the communication paths that interconnect the mobile node and the network part. Signaling generated at the mobile node and at the network part of the communication system are communicated by way of the downlink and uplink channels defined upon the radio links that extend therebetween.

The mobile node includes transceiver circuitry, here represented by a receive part 52 and a transmit part 54. The receive part receives data communicated upon a downlink channel defined upon the radio downlink 14, and the transmit part 54 transmits data upon uplink channels defined upon the uplink 16. The apparatus 50 is coupled both to the receive and transmit parts 52 and 54. The apparatus is further coupled to the databases 40, 42, and 44.

The apparatus includes an individual hash generator 58 that is selectably operable, here by way of a trigger applied thereto on the line 62, to form hash values representative of the contents of individual data records of a database 40, 42, or 44. The hash values are formed by performing a hash function upon at least selected fields of the individual data records. The individual hash generator forms individual hash values associated with successive data records, such as adjacent data records, of a selected database, and provides indications of the values both to a buffer 64 and to a group hash generator 66. The individual hash values are buffered at the buffer, available for subsequent retrieval, if needed.

The group hash generator is selectably operable, here triggered by a trigger applied thereto on the line 67, to form group hash values representative of a group of data records, such as a set of successive data records of a database. The group hash generator, for instance, aggregates values of the individual hashes generated by the individual hash generator pursuant to a cumulative or additive process. Group hash values formed by the group hash generator are provided on the line 72 that extends to the transmit part 54.

The apparatus further includes a group identifier 76 selectably operable to generate group identifiers identifying the group for which the group hash generator forms the group hash. The group identity formed by the group identifier is also provided to the transmit part 54. The values buffered at the buffer 64 are further selectably provided to the transmit part, here indicated by the line 82.

The apparatus further includes a message generator 84 operable to form a message for communication upon an uplink channel to the network part pursuant to synchronization operations. The message generator 84 here first operates pursuant to the synchronization procedures to send an indication of a group hash value formed by the group hash generator together with a group identifier associated with the group of data records from which the group hash is derived to the network part. Subsequently, if needed, the message generator further operates to form messages containing hashes associated with individual data records of the group.

The apparatus 50 embodied at the network part includes a detector 86 that operates to detect the messages containing the hash information, transmitted to the network part by the mobile node. Indications of the detected messages are provided to a comparator 88 that compares values detected by the detector with corresponding values formed at the network part. Here, the comparator is coupled to a corresponding individual hash generator 90 and a group hash generator 92 as well as, also, to a corresponding buffer 94. The operation of the hash generators 90 and 92 correspond to operation of the hash generators 58 and 66. And, the data buffered at the buffer 94 corresponds to the data buffered at the buffer 64.

The comparator compares the detected values detected by the detector with corresponding values that are locally generated. If the comparison indicates a complete match, the data contained in the data records and of which the hashes are representative are determined to be in complete match, and subsequent actions with respect to synchronization, such as by overwriting data, is not required. If the comparison indicates a mismatch, additional synchronization operations are required to indicate the mismatch and to perform overwriting functions, as necessary, to place the databases back in complete correspondence with one another.

During operation of an exemplary implementation, individual hashes are formed at the mobile node, buffered at the buffer 64, and a group hash associated with a group of data records is formed by the group hash generator 66. The group identifier identifies the group with which the group hash is associated, and a message is generated by the message generator indicative of the group hash value. The message containing the group hash value is sent to the network part, detected by the detector 86, and compared at the comparator 88 with a corresponding, locally generated group hash value. If the comparison indicates that the hash values are in correspondence, the data of the data records with which the group hash values are associated are determined to be in complete correspondence. If, however, the group hash values differ, one or more data records of the group of data records with which the group hash value is associated is determined potentially to be out of match. Additional information is required. A request is generated by the network part for group hash values of individual data records of the group. Responsive to receipt of the request at the mobile node, the individual data records are retrieved from the buffer 64, or re-generated at the individual hash generator, and a message is generated at the message generator 84, containing the individual data records, or successive messages containing one or more of the individual record hash values. The message, or messages, containing the values of the individual hashes are detected by the detector and compared with corresponding, locally generated values of the individual hashes. If the comparison indicates the values to be in correspondence, the data contained in the associated individual data records are correspondingly also determined to be in complete match with one another. If the comparison indicates that the values of a pair of individual hashes to be out of correspondence with one another, additional synchronization operations are required. Transfer of the values of the one or more fields of the data records are then compared. Because, however, hash values are communicated for the individual data records for all but the data records for which data correspondence cannot be confirmed, the amount of radio resources required pursuant to the synchronization operations remain minimal.

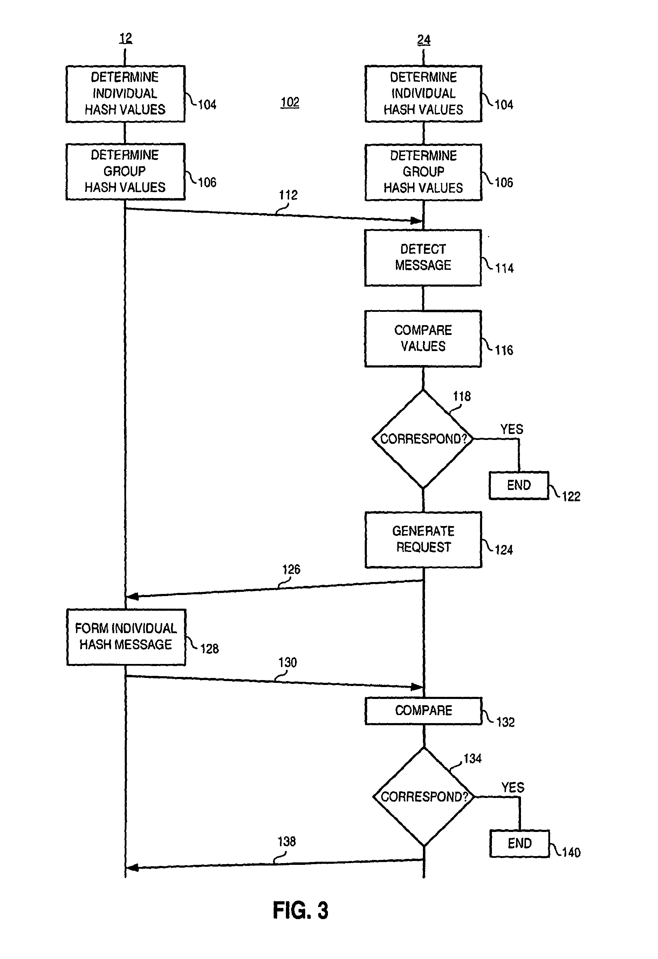

Figure 3 illustrates a message sequence diagram, shown generally at 102, representative of signaling generated during operation of an embodiment of the present invention. The signaling is generated to determine whether database copies embodied at a mobile node 12 and the network part of the communication system are in correspondence with one another. Operations are performed at the mobile node and at the network part, and the results of such operations are compared. If a determination can be made that the databases are in match with one another, additional synchronization operations are obviated. And, when such determination cannot be made, additional signaling generated to determine whether the data records of the database copies are in match with one another.

Accordingly, as indicated by the blocks 104, individual hashes of individual data records are formed. And, as indicated by the blocks 106, group hash values are determined, such as by aggregating values of individual hashes. A message containing the value of the group hash is formed, and the message is sent, indicated by the segment 112, by the mobile node to the network part. The message is detected, as indicated by the block 114, and comparisons are performed, as indicated by the block 116, between the locally generated value of the group hash and the value contained in the message sent by the mobile node. A determination is made, as indicated by the decision block 118, as to whether the values are in complete correspondence with one another. If so, the yes branch is taken to the end block 122. Otherwise, the no branch is taken, and a request is generated, indicated by the block 124, for additional information, i.e., values of individual hashes of individual data records of the group. The request is sent, indicated by the segment 126, and delivered to the mobile node. Responsive thereto, the values of the individual hashes, such as those buffered at a buffer, are collected and formed into a message, indicated by the block 128, and values thereof are sent, indicated by the segment 128, to the network part. Additional comparisons and determinations are made, indicated by the blocks 132 and 134. If, responsive to determinations made at the block 134, a mismatch is still indicated, additional synchronization operations, indicated generally, by the block 138, commence. Otherwise, the yes branch is taken to the end block 140.

Because group hashes are first used to determine whether the database copies are synchronization with one another, only minimal radio resources are required to make such determinations. And, even when an initial determination indicates the database copies perhaps to be out of match with one another, hashes of individual data records are used, further requiring only minimal radio resources for their communication.

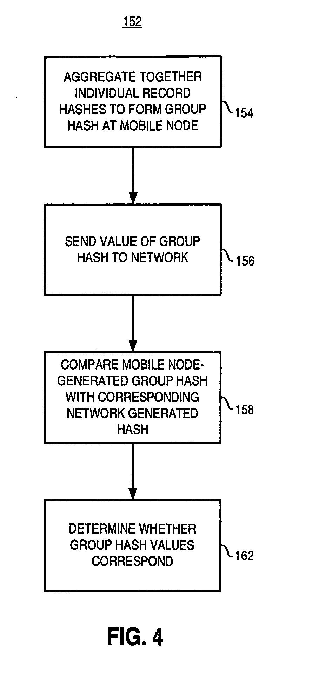

Figure 4 illustrates a method flow diagram, shown generally at 152, representative of the method of operation of an embodiment of the present invention. The method facilitates determination of whether a first network copy database is in match with a first mobile copy database.

First, and as indicated by the block 154, individual record hashes of individual data records of at least a first selected group of data records of a first mobile copy database are aggregated together to form a group hash value.

Then, and as indicated by the block 156, the group hash value is sent to the network part. Once received at the network part, and as indicated by the block 158, the group hash value sent to the network part is compared with a corresponding network generated value. And, as indicated by the block 162, a determination is made whether the group hash value corresponds in value with the corresponding network generated value.

Because group hashes are first communicated over the radio air interface to determine whether groups of data records of database copies are in complete conformity with one another, reduced radio resources, relative to conventional methods of such determination, are required. Improved communication efficiency results, facilitating improved system performance.

The previous descriptions are of preferred examples for implementing the invention, and the scope of the invention should not necessarily be limited by this description. The scope of the present invention is defined by the following claims:

## Claims

1. Apparatus (50) for a radio communication system comprising a network part (24) having at least a first network copy database (30, 32, 34) maintained thereat and a mobile node (12) having a corresponding at least a first mobile copy database (40, 42, 44) maintained thereat, data of the first network copy database and the first mobile copy database in match with one another when data of each data record of the first network copy database is in complete correspondence with corresponding data of each data record of the first mobile copy database, the data records of the first network and mobile copy databases, respectively, having data fields, said apparatus (50) for facilitating determination of whether the first network copy database is in match with the first mobile copy database, said apparatus comprising:
the first network copy database (30, 32, 34) and the first mobile copy database (40, 42, 44) being of an extensible mark-up language (XML) format;
an individual record hash generator (58) embodied at the mobile node (12) and adapted to receive indications of at least a selected field of at least selected data records of the at least the first mobile copy database, said individual record hash generator (58) for generating an individual record hash for each data record of the selected data records;
an individual record hash buffer (64) adapted to receive values representative of the individual record hashes formed by said individual record hash generator (58), said individual hash buffer (64) for buffering the values representative of the individual record hashes separate from the first mobile copy database
a group hash generator (66) embodied at the mobile node and adapted to receive indications of the values of the individual record hashes generated by said individual record hash generator (58), said group hash generator (66) selectably for forming a group hash value formed of aggregated hash values aggregated from the values of the individual record hashes, the group hash values for communication to the network part to determine whether the first network copy database and the first mobile copy database are in match with one another, and the individual record hashes selectably for subsequent communication to the network part; and
a message generator (84) embodied at the mobile node and adapted to receive the group hash value generated by said group hash generator and the values buffered at said individual record hash buffer, said message generator configured to generate a message containing the group hash value and, if requested, a message containing the individual record hashes of the data records of the selected data records.

2. The apparatus (50) of claim 1 wherein the individual record hashes formed by said individual record hash generator are communicated to the network part upon preliminary determination that the network copy database and the mobile copy database are out of match with one anther responsive to analysis, at the network part, of the group hash value.

3. The apparatus (50) of claim 2 wherein the preliminary determination is performed at the network part and wherein said apparatus further comprises a detector for detecting indications of the preliminary determination made at the network part.

4. The apparatus (50) of claim 3 wherein individual record hashes buffered at said individual record hash buffer are selectably retrieved from said buffer for communication to the network part, responsive to detection at the mobile node of the preliminary determination that the network copy database and the mobile copy database are out of match with one another.

5. The apparatus (50) of claim 1 wherein each group of the at least the first selected group is identified by a group identifier (76), the group identifier (76) for communication to the network part together with the group hash value formed by said group hash generator (66).

6. The apparatus (50) of claim 5 wherein said message generator (84) is further adapted to receive indications of the group hash value and the group identifier associated therewith, said message generator (84) for forming a message formatted to include both the group hash value and the group identifier.

7. The apparatus (50) of claim 1 further comprising:
a determiner (88) embodied at the network part and adapted to receive values of the group hash formed by said group hash generator and communicated to the network part by the mobile node, said determiner for determining whether values of the group hash correspond with network generated values.

8. The apparatus (50) of claim 7 wherein said apparatus further comprises a requester coupled to said determiner to receive indications of determinations made thereat, said requestor selectable for requesting additional information associated with the at least the first mobile copy database.

9. The apparatus (50) of claim 8 wherein the additional information selectably requested by said requestor comprises values of the individual record hashes that are buffered at said individual record hash buffer.

10. The apparatus (50) of claim 10 wherein said determiner (88) is further adapted to receive values of the individual record hashes selectably further communicated to the network part by the mobile node, said determiner further for determining whether values of the individual record hashes correspond with corresponding network generated values.

11. A method (152) of communicating in a radio communication system comprising a network part having at least a first network copy database maintained thereat and a mobile node having a corresponding at least a first mobile copy database maintained thereat, data of the first network copy database and the first mobile copy database in match with one another when data of each data record of the first network copy database is in complete correspondence with corresponding data of each data record of the first mobile copy database, the data records of the first network and mobile copy databases, respectively, having data fields, said method for facilitating determination of whether the first network copy database is in match with the first mobile copy database, said method comprising:
generating an individual record hash at the mobile node for each data record of at least a selected field of at least selected data records of the at least the first mobile copy database, the first mobile copy database being of an extensible mark-up language (XML) format;
buffering values representative of each individual record hash generated during said operation of generating the individual record hash at a buffer separate from the first mobile copy database;
aggregating (154) together individual record hashes of individual data records of at least a first selected group of data records of the at least the first mobile copy database to form a group hash value;
sending (156) the group hash value formed during said operation of aggregating to the network part;
comparing (156) the group hash value sent to the network part during said operation of sending with a corresponding network generated value derived from the at least the first network copy database, the first network copy database being of an extensible mark-up language (XML) format;
determining (162) whether the group hash value corresponds in value with the corresponding network generated value; and, if the group hash value is out of correspondence with the corresponding network generated values, then
sending a message containing the values of the individual record hashes to the network part.

12. The method of claim 11 further comprising the operation of concluding the first network copy database to be in match with the mobile copy database if the group hash value is determined during said operation of determining to correspond in value with the corresponding network generated value.

13. The method of claim 12 further comprising the operation of requesting additional information if the group hash value is determined during said operation of determining not to correspond in value with the corresponding network generated value.

14. The method of claim 13 wherein the additional information requested during said operation of requesting comprises values of the individual record hashes that are added together to form the group hash value.

15. The method of claim 14 further comprising the operation, prior to said operation of sending the individual record hashes, retrieving values of the individual record hashes buffered during said step of buffering.

16. The method of claim 15 further comprising the operation of comparing the individual record hashes, once delivered to the network part, with corresponding locally generated values.

## Patentansprüche

1. Vorrichtung (50) für ein Funkkommunikationssystem, das ein Netzwerkteil (24), welches wenigstens eine erste Netzwerk-Kopiedatenbank (30, 32, 34), die daran aufrechterhalten ist, aufweist, und einen mobilen Knoten (12), welcher eine entsprechende wenigstens eine erste mobile Kopiedatenbank (40, 42, 44), die daran aufrechterhalten ist, aufweist, umfasst, wobei Daten der ersten Netzwerk-Kopiedatenbank und der ersten mobilen Kopiedatenbank miteinander übereinstimmen, wenn sich Daten von jeder Datenaufnahme der ersten Netzwerk-Kopiedatenbank in vollständiger Übereinstimmung mit entsprechenden Daten von jeder Datenaufnahme der ersten mobilen Kopiedatenbank befinden, wobei die Datenaufnahmen der ersten Netzwerk- bzw. mobilen Kopiedatenbank Datenfelder aufweisen, wobei die Vorrichtung (50) zum Vereinfachen einer Bestimmung, ob sich die erste Netzwerk-Kopiedatenbank mit der ersten mobilen Kopiedatenbank in Übereinstimmung befindet, vorgesehen ist, wobei die Vorrichtung umfasst:
Die erste Netzwerk-Kopiedatenbank (30, 32, 34) und die erste mobile Kopiedatenbank (40, 42, 44) sind von einem Extensible Mark-Up Language (XML)-Format,
einen individuellen Aufnahme-Hash-Generator (58), der an dem mobilen Knoten (12) vorgesehen ist und geeignet ist, Hinweise von wenigstens einem ausgewählten Feld von wenigstens ausgewählten Datenaufnahmen der wenigstens der ersten mobilen Kopiedatenbank zu empfangen, wobei der individuelle Aufnahme-Hash-Generator (58) zum Erzeugen eines individuellen Aufnahme-Hash für jede Datenaufnahme der ausgewählten Datenaufnahmen vorgesehen ist,
einen individuelleen Aufnahme-Hash-Puffer (64), der geeignet ist, Werte, die zu den individuellen Aufnahme-Hashes, welche durch den individuellen Aufnahme-Hash-Generator (58) gebildet sind, repräsentativ sind, zu empfangen, wobei der individuelle Hash-Puffer (64) zum Puffern der Werte, die zu den individuellen Aufnahme-Hashes, welche von der ersten mobilen Kopiedatenbank getrennt sind, repräsentativ sind, vorgesehen ist,
einen Gruppen-Hash-Generator (66), der an dem mobilen Knoten vorgesehen ist und geeignet ist, Hinweise von den Werten der individuellen Aufnahme-Hashes, welche durch den individuellen Aufnahme-Hash-Generator (58) erzeugt sind, zu empfangen, wobei der Gruppen-Hash-Generator (66) selektiv zum Bilden eines Gruppen-Hash-Wertes, der aus aggregierten Hash-Werten, welche aus den Werten der individuellen Aufnahme-Hashes aggregiert sind, gebildet sind, vorgesehen ist, wobei die Gruppen-Hash-Werte für eine Kommunikation mit dem Netzwerkteil vorgesehen sind, um zu bestimmen, ob sich die erste Netzwerk-Kopiedatenbank und die erste mobile Kopiedatenbank in Übereinstimmung zueinander befinden, und
die individuellen Aufnahme-Hashes selektiv für eine nachfolgende Kommunikation mit dem Netzwerkteil vorgesehen sind, und
einen Nachrichten-Generator (84), der an dem mobilen Knoten vorgesehen ist und geeignet ist, den Gruppen-Hash-Wert, welcher durch den Gruppen-Hash-Generator erzeugt ist, und die Werte, welche an dem individuellen Aufnahme-Hash-Puffer gepuffert sind, zu empfangen, wobei der Nachrichten-Generator ausgebildet ist, um eine Nachricht, welche den Gruppen-Hash-Wert umfasst und, wenn erforderlich, eine Nachricht, welche die individuellen Aufnahme-Hashes der Datenaufnahmen der ausgewählten Datenaufnahmen umfasst, zu erzeugen.

2. Vorrichtung (50) nach Anspruch 1, wobei die individuellen Aufnahme-Hashes, welche durch den individuellen Aufnahme-Hash-Generator gebildet sind, an das Netzwerkteil nach einer vorausgehenden Bestimmung, dass sich die Netzwerk-Kopiedatenbank und die mobile Kopiedatenbank außerhalb einer Übereinstimmung zueinander befinden, in Antwort auf eine Analyse des Gruppen-Hash-Wertes an dem Netzwerkteil kommuniziert werden.

3. Vorrichtung (50) nach Anspruch 2, wobei die vorausgehende Bestimmung an dem Netzwerkteil durchgeführt wird und wobei die Vorrichtung weiterhin einen Detektor zum Erfassen von Hinweisen der vorausgehenden Bestimmung, die an dem Netzwerkteil erfolgt ist, umfasst.

4. Vorrichtung (50) nach Anspruch 3, wobei individuelle Aufnahme-Hashes, die an dem individuellen Aufnahme-Hash-Puffer gepuffert sind, von dem Puffer zur Kommunikation an das Netzwerkteil in Antwort auf eine Erfassung an dem mobilen Knoten der vorausgehenden Bestimmung, das sich die Netzwerk-Kopiedatenbank und die mobile Kopiedatenbank außerhalb einer Übereinstimmung zueinander befinden, selektiv abgerufen werden

5. Vorrichtung (50) nach Anspruch 1, wobei jede Gruppe der wenigstens der ersten ausgewählten Gruppe durch eine GruppenKennung (76) identifiziert wird, wobei die Gruppen-Kennung (76) zur Kommunikation an das Netzwerkteil zusammen mit dem Gruppen-Hash-Wert, welcher durch den Gruppen-Hash-Generator (66) gebildet ist, vorgesehen ist.

6. Vorrichtung (50) nach Anspruch 5, wobei der Nachrichten-Generator (84) weiterhin geeignet ist, Hinweise des Gruppen-Hash-Wertes und die damit zugeordnete Gruppen-Kennung zu empfangen, wobei der Nachrichten-Generator (84) zum Bilden einer formatierten Nachricht, um den Gruppen-Hash-Wert und die Gruppen-Kennung zu umfassen, vorgesehen ist.

7. Vorrichtung (50) nach Anspruch 1, weiterhin umfassend:
Eine Bestimmungseinrichtung (88), die an dem Netzwerkteil vorgesehen ist und geeignet ist, Werte des Gruppen-Hashes, welche durch den Gruppen-Hash-Generator gebildet sind und an das Netzwerkteil durch den mobilen Knoten kommuniziert werden, zu empfangen, wobei die Bestimmungseinrichtung zum Bestimmen, ob Werte des Gruppen-Hashes mit Netzwerk-erzeugten Werten korrespondieren, vorgesehen ist.

8. Vorrichtung (50) nach Anspruch 7, wobei die Vorrichtung weiterhin eine Anforderungseinrichtung, die mit der Bestimmungseinrichtung verbunden ist, um Hinweise von daran erfolgten Bestimmungen zu empfangen, umfasst, wobei die Anforderungseinrichtung zum Anfordern von zusätzlichen Informationen, welche der wenigstens der ersten mobilen Kopiedatenbank zugeordnet sind, vorgesehen ist.

9. Vorrichtung (50) nach Anspruch 8, wobei die zusätzlichen Informationen, welche durch die Anforderungseinrichtung selektiv angefordert sind, Werte der individuellen Aufnahme-Hashes, welche an dem individuellen Aufnahme-Hash-Puffer gepuffert sind, umfassen.

10. Vorrichtung (50) nach Anspruch 10, wobei die Bestimmungseinrichtung (88) weiterhin geeignet ist, Werte der individuellen Aufnahme-Hashes, die selektiv weiterhin an das Netzwerkteil des mobilen Knotens kommuniziert werden, zu empfangen, wobei die Bestimmungseinrichtung weiterhin zum Bestimmen, ob Werte der individuellen Aufnahme-Hashes mit entsprechenden Netzwerk-erzeugten Werten übereinstimmen, vorgesehen ist.

11. Verfahren (152) zum Kommunizieren in einem Funkkommunikationssystem das ein Netzwerkteil, welches wenigstens eine erste Netzwerk-Kopiedatenbank, die daran aufrechterhalten ist, aufweist, und einen mobilen Knoten, welcher eine entsprechende wenigstens eine erste mobile Kopiedatenbank, die daran aufrechterhalten ist, aufweist, umfasst, wobei Daten der ersten Netzwerk-Kopiedatenbank und der ersten mobilen Kopiedatenbank miteinander übereinstimmen, wenn sich Daten von jeder Datenaufnahme der ersten Netzwerk-Kopiedatenbank in vollständiger Übereinstimmung mit entsprechenden Daten von jeder Datenaufnahme der ersten mobilen Kopiedatenbank befinden, wobei die Datenaufnahmen der ersten Netzwerk- bzw. mobilen Kopiedatenbank Datenfelder aufweisen, wobei die Vorrichtung zum Vereinfachen einer Bestimmung, ob sich die erste Netzwerk-Kopiedatenbank mit der ersten mobilen Kopiedatenbank in Übereinstimmung befindet, vorgesehen ist, wobei das Verfahren umfasst:
Erzeugen eines individuellen Aufnahme-Hashes an dem mobilen Knoten für jede Datenaufnahme von wenigstens einem ausgewählten Feld von wenigstens ausgewählten Datenaufnahmen der wenigstens der ersten mobilen Kopiedatenbank, wobei die erste mobile Kopiedatenbank von einem Extensible Mark-Up Language (XML)-Format ist,
Puffern von Werten, die zu jedem individuellen Aufnahme-Hash, der während des Vorganges zum Erzeugen des individuellen Aufnahme-Hashes an dem Puffer getrennt von der ersten mobilen Kopiedatenbank erzeugt wird, repräsentativ sind,
Aggregieren (154) miteinander von individuellen Aufnahme-Hashes von individuellen Datenaufnahmen von wenigstens einer ersten ausgewählten Gruppe von Datenaufnahmen der wenigstens der ersten mobilen Kopiedatenbank, um einen Gruppen-Hash-Wert zu bilden,
Senden (156) des Gruppen-Hash-Wertes, der während des Vorganges zum Aggregieren gebildet wird, an das Netzwerkteil,
Vergleichen (156) des Gruppen-Hash-Wertes, der an das Netzwerkteil während des Vorganges zum Senden gesendet wird, mit einem entsprechenden Netzwerk-erzeugten Wert, der von der wenigstens der ersten Netzwerk-Kopiedatenbank abgeleitet wird, wobei die erste Netzwerk-Kopiedatenbank von einem Extensible Mark-Up Language (XML)-Format ist,
Bestimmen (162), ob der Gruppen-Hash-Wert mit dem entsprechenden Netzwerk-erzeugten Wert im Wert übereinstimmt und, wenn sich der Gruppen-Hash-Wert außerhalb einer Übereinstimmung mit dem entsprechenden Netzwerk-erzeugten Werten befindet, dann
Senden einer Nachricht, welche die Werte der individuellen Aufnahme-Hashes enthalten, an das Netzwerkteil.

12. Verfahren nach Anspruch 11, weiterhin umfassend den Vorgang eines Abschließens der ersten Netzwerk-Kopiedatenbank, die sich mit der mobilen Kopiedatenbank in Übereinstimmung befindet, wenn der Gruppen-Hash-Wert während des Vorganges zum Bestimmen, um mit dem entsprechenden Netzwerk-erzeugten Wert im Wert übereinzustimmen, bestimmt wird.

13. Verfahren nach Anspruch 12, weiterhin umfassend den Vorgang eines Anforderns von zusätzlichen Informationen, wenn der Gruppen-Hash-Wert während des Vorganges zum Bestimmen, um mit dem entsprechenden Netzwerk-erzeugten Wert im Wert nicht übereinzustimmen, bestimmt wird.

14. Verfahren nach Anspruch 13, wobei die zusätzlichen Informationen, die während des Vorganges zum Anfordern angefordert werden, Werte der individuellen Aufnahme-Hashes, welche zusammen addiert werden, um den Gruppen-Hash-Wert zu bilden, umfassen.

15. Verfahren nach Anspruch 14, weiterhin, vor dem Vorgang zum Senden der individuellen Aufnahme-Hashes, umfassend den Vorgang eines Abrufens von Werten der individuellen Aufnahme-Hashes, die während des Schrittes zum Puffern gepuffert werden.

16. Verfahren Anspruch 15, weiterhin umfassend den Vorgang eines Vergleichens der individuellen Aufnahme-Hashes, nachdem sie an das Netzwerkteil geliefert sind, mit entsprechenden lokal erzeugten Werten.

## Revendications

1. Appareil (50) pour un système de communication radio comprenant une partie de réseau (24) ayant au moins une première copie de base de données de réseau (30, 32, 34) qui y est tenue à jour et un noeud mobile (12) ayant au moins une première copie de base de données de mobile (40, 42, 44) correspondante qui y est tenue à jour, les données de la première copie de base de données de réseau et de la première copie de base de données de mobile se correspondant lorsque les données de chaque enregistrement de données de la première copie de base de données de réseau sont en correspondance totale avec des données correspondantes de chaque enregistrement de données de la première copie de base de données de mobile, les enregistrements de données des premières copies de bases de données de réseau et de mobile, respectivement, comportant des champs de données, ledit appareil (50) étant destiné à faciliter la détermination de la correspondance ou non entre la première copie de base de données de réseau et la première copie de base de données de mobile, ledit appareil comprenant :
la première copie de base de données de réseau (30, 32, 34) et la première copie de base de données de mobile (40, 42, 44) étant dans un format de langage de balisage extensible (XML, pour « *Extensible Mark-up Language* ») ;
un générateur de hachage d'enregistrement individuel (58) mis en oeuvre sur le noeud mobile (12) et conçu pour recevoir des indications sur au moins un champ sélectionné d'au moins certains enregistrements de données sélectionnés de ladite au moins une première copie de base de données de mobile, ledit générateur de hachage d'enregistrement individuel (58) étant destiné à produire un hachage d'enregistrement individuel pour chaque enregistrement de données parmi les enregistrements de données sélectionnés ;
un tampon de hachages d'enregistrements individuels (64) conçu pour recevoir des valeurs représentant les hachages d'enregistrements individuels produits par ledit générateur de hachage d'enregistrement individuel (58), ledit tampon de hachages individuels (64) étant destiné à stocker les valeurs représentant les hachages d'enregistrements individuels séparément de la première copie de base de données de mobile ;
un générateur de hachage de groupe (66), mis en oeuvre sur le noeud mobile et conçu pour recevoir des indications des valeurs des hachages d'enregistrements individuels produits par ledit générateur de hachage d'enregistrement individuel (58), ledit générateur de hachage de groupe (66) pouvant être sélectionné pour former une valeur de hachage de groupe formée de valeurs de hachage agrégées, obtenues par l'agrégation des valeurs des hachages d'enregistrements individuels, les valeurs de hachage de groupe étant destinées à être communiquées à la partie de réseau afin de déterminer si la première copie de base de données de réseau et la première copie de base de données de mobile sont en correspondance l'une vis-à-vis de l'autre et les hachages d'enregistrements individuels pouvant être sélectionnés pour leur communication ultérieure à la partie de réseau ; et
un générateur de messages (84), mis en oeuvre sur le noeud mobile et conçu pour recevoir la valeur de hachage de groupe produite par ledit générateur de hachage de groupe et les valeurs stockées dans ledit tampon de hachages d'enregistrements individuels, ledit générateur de messages étant configuré pour produire un message contenant la valeur de hachage de groupe et, si cela est demandé, un message contenant les hachages d'enregistrements individuels des enregistrements de données parmi les enregistrements de données sélectionnés.

2. Appareil (50) selon la revendication 1, dans lequel les hachages d'enregistrements individuels produits par ledit générateur de hachage d'enregistrement individuel sont communiqués à la partie de réseau après une détermination préliminaire indiquant que la copie de base de données de réseau et la copie de base de données de mobile ne sont pas en correspondance l'une avec l'autre après l'analyse, sur la partie de réseau, de la valeur de hachage de groupe.

3. Appareil (50) selon la revendication 2, dans lequel la détermination préliminaire est effectuée sur la partie de réseau et dans lequel ledit appareil comprend en outre un détecteur destiné à détecter des indications de la détermination préliminaire effectuée sur la partie de réseau.

4. Appareil (50) selon la revendication 3, dans lequel des hachages d'enregistrements individuels, dans ledit tampon de hachages d'enregistrements individuels, peuvent être sélectivement extraits dudit tampon pour leur communication à la partie de réseau, en réponse à la détection, sur le noeud mobile, de la détermination préliminaire indiquant que la copie de base de données de réseau et la copie de base de données de mobile ne coïncident plus entre elles.

5. Appareil (50) selon la revendication 1, dans lequel chaque groupe, parmi ledit au moins premier groupe sélectionné, est identifié par un identificateur de groupe (76), l'identificateur de groupe (76) étant destiné à être communiqué à la partie de réseau conjointement avec la valeur de hachage de groupe formée par ledit générateur de hachage de groupe (66).

6. Appareil (50) selon la revendication 5, dans lequel ledit générateur de messages (84) est en outre conçu pour recevoir des indications de la valeur de hachage de groupe et l'identificateur de groupe associé à celle-ci, ledit générateur de messages (84) étant destiné à former un message formaté de manière à inclure à la fois la valeur de hachage de groupe et l'identificateur de groupe.

7. Appareil (50) selon la revendication 1, comprenant en outre :
un déterminateur (88), mis en oeuvre dans la partie de réseau et conçu pour recevoir des valeurs de hachages de groupe formées par ledit générateur de hachage de groupe et communiquées à la partie de réseau par le noeud mobile, ledit déterminateur étant destiné à déterminer si les valeurs de hachages de groupe correspondent aux valeurs produites sur le réseau.

8. Appareil (50) selon la revendication 7, dans lequel ledit appareil comprend en outre un demandeur, couplé audit déterminateur afin de recevoir des indications sur les déterminations qui y sont réalisées, ledit demandeur pouvant être sélectionné pour demander des informations supplémentaires associées à ladite au moins première copie de base de données de mobile.

9. Appareil (50) selon la revendication 8, dans lequel les informations supplémentaires pouvant être sélectivement demandées par ledit demandeur comprennent des valeurs des hachages d'enregistrements individuels qui sont stockées dans ledit tampon de hachages d'enregistrements individuels.

10. Appareil (50) selon la revendication 10, dans lequel ledit déterminateur (88) est en outre conçu pour recevoir des valeurs des hachages d'enregistrements individuels pouvant en outre être sélectivement communiquées à la partie de réseau par le noeud mobile, ledit déterminateur étant en outre destiné à déterminer si des valeurs des hachages d'enregistrements individuels correspondent à des valeurs correspondantes produites par le réseau.

11. Procédé (152) de communication dans un système de communication radio comprenant une partie de réseau ayant au moins une première copie de base de données de réseau qui y est tenue à jour et un noeud mobile ayant au moins une première copie de base de données de mobile correspondante qui y est tenue à jour, les données de la première copie de base de données de réseau et de la première copie de base de données de mobile se correspondant lorsque les données de chaque enregistrement de données de la première copie de base de données de réseau sont en correspondance totale avec des données correspondantes de chaque enregistrement de données de la première copie de base de données de mobile, les enregistrements de données des premières copies de bases de données de réseau et de mobile, respectivement, comportant des champs de données, ledit procédé étant destiné à faciliter la détermination de la correspondance ou non entre la première copie de base de données de réseau et la première copie de base de données de mobile, ledit procédé comprenant les étapes consistant à :
produire un hachage d'enregistrement individuel sur le noeud mobile pour chaque enregistrement de données, sur au moins un champ sélectionné d'au moins certains enregistrements de données sélectionnés dans ladite au moins première copie de base de données de mobile, la première copie de base de données de mobile étant dans un format de langage de balisage extensible (XML) ;
mettre en mémoire tampon des valeurs représentatives de chaque hachage d'enregistrement individuel produit pendant ladite étape de production des hachages d'enregistrements individuels, dans un tampon distinct de la première copie de base de données de mobile ;
agréger (154) ensemble des hachages d'enregistrements individuels d'enregistrements de données individuels d'au moins un premier groupe sélectionné d'enregistrements de données d'au moins la première copie de base de données de mobile, pour former une valeur de hachage de groupe ;
envoyer (156) la valeur de hachage de groupe formée dans ladite étape d'agrégation à la partie de réseau ;
comparer (156) la valeur de hachage de groupe envoyée à la partie de réseau dans ladite étape d'envoi avec une valeur correspondante produite sur le réseau, dérivée de ladite au moins première copie de base de données de réseau, la première copie de base de données de réseau étant dans un format de langage de balisage extensible (XML) ;
déterminer (162) si la valeur de hachage de groupe correspond par sa valeur à la valeur correspondante produite sur le réseau ; et, si la valeur de hachage de groupe ne correspond pas avec les valeurs correspondantes produites sur le réseau,
envoyer un message contentant les valeurs des hachages d'enregistrements individuels à la partie de réseau.

12. Procédé selon la revendication 11, comprenant en outre l'étape consistant à conclure que la première copie de base de données de réseau correspond à la copie de base de données de mobile s'il est déterminé dans ladite étape de détermination que la valeur de hachage de groupe correspond par sa valeur à la valeur correspondante produite sur le réseau.

13. Procédé selon la revendication 12, comprenant en outre l'étape consistant à demander des informations supplémentaires s'il est déterminé, dans ladite étape de détermination, que la valeur de hachage de groupe ne correspond pas par sa valeur à la valeur correspondante produite sur le réseau.

14. Procédé selon la revendication 13, dans lequel les informations supplémentaires demandées dans ladite étape de demande comprennent des valeurs des hachages d'enregistrements individuels qui sont additionnées ensemble pour former la valeur de hachage de groupe.

15. Procédé selon la revendication 14, comprenant en outre, avant ladite étape d'envoi des hachages d'enregistrements individuels, l'étape consistant à extraire les valeurs des hachages d'enregistrements individuels mises en mémoire tampon dans ladite étape de mise en mémoire tampon.

16. Procédé selon la revendication 15, comprenant en outre l'étape consistant à comparer les hachages d'enregistrements individuels, après leur fourniture à la partie de réseau, avec des valeurs correspondantes produites localement.
